# EUROPEAN PATENT APPLICATION

(11) **EP 1 942 201 A1**
(43) Date of publication of application: **09.07.2008**
(21) Application number: 07000107.8
(22) Date of filing: 04.01.2007
(51) Int. Cl.: C22B 1/20, C22B 1/245, C22B 1/244

(54) **Ore sintering composition and ore sintering method**

(71) Applicant: CHINA STEEL CORPORATION, Hsiao-Kang Dist. Kao hsiung (TW); Lee, Wen-Jhy, Cheng-De Li Pei Dist. Tainan City (TW)
(72) Inventor: Mou, Jin-Luh, Kaohsiung City (TW); Lee, Wen-Jhy, Cheng-De Li Pei Dist. Tainan City (TW)
(74) Representative: Martin, Philip John

(57) **Abstract**

An ore sintering composition includes: particulate ores; fluxes; coke breeze; and a production enhancing agent that includes a viscous concentrated sweetener. An ore sintering method includes: preparing a raw material containing particulate ores, fluxes, and coke breeze; forming pseudo-particles by attaching adhering fines of the raw material onto coarse nuclei of the raw material through water and a viscous concentrated sweetener so as to form a sinter mix; and combusting the coke breeze to consolidate the sinter mix into a sinter cake.

## Description

This invention relates to an ore sintering composition and an ore sintering method, more particularly to an ore sintering composition including a viscous concentrated' sweetener and organic enzyme, and an ore sintering method using the ore sintering composition.

A conventional sintering process includes mixing ores (e.g., iron ores), fluxes, and coke breeze with water in mixing drum so as to form a uniform mixture, disposing the mixture onto a sintering machine, igniting the coke breeze of the mixture by passing the mixture through an ignition furnace so as to form a combustion zone, and melting attached fine particles of the mixture so as to consolidate the mixture into a sinter cake. The sinter cake is broken and screened to obtained suitable size (>5mm) for subsequent usage. Broken pellets with a size under 5mm referred as return fines will be re-fed into the sintering process.

In the sintering process, productivity is defined as produced sintered ores in a unit area in 24 hours, i.e., ton/m²/24hrs.

The object of this invention is to provide an ore sintering composition and an ore sintering method using the ore sintering composition to promote the sintering productivity without increasing the costs and complexity of the existing equipment or facilities.

According to one aspect of this invention, an ore sintering composition includes particulate ores, fluxes, coke breeze, and a production enhancing agent that includes a viscous concentrated sweetener.

According to another aspect of this invention, an ore sintering method includes: preparing a raw material containing particulate ores, fluxes, and coke breeze; forming pseudo-particles by attaching adhering fines of the raw material onto coarse nuclei of the raw material through water and a production enhancing agent so as to form a sinter mix; and combusting the coke breeze to consolidate the sinter mix into a sinter cake.

These and other features and advantages of this invention will become apparent in the following detailed description of a preferred embodiment of this invention, with reference to the accompanying drawings, in which:
Fig. 1 is a flow chart illustrating consecutive steps of the preferred embodiment of an ore sintering method according to this invention; and
Fig. 2 is a schematic view of a sintering system for performing the ore sintering method according to this invention.

The preferred embodiment of an ore sintering composition according to this invention includes particulate ores, fluxes, coke breeze, water, and a production enhancing agent that includes a viscous concentrated sweetener and organic enzyme.

Since the mixture of the particulate ores, fluxes, and the coke breeze contains a considerable amount of fine particles, a conventional method by adding solely water for granulation cannot achieve satisfied porosity and permeability when the suction flow air passing such kind of granules on the sintering machine, which results in poor combustion efficiency of coke breeze. To solve this problem, the viscous concentrated sweetener is therefore applied. Particularly, the adhering fines (i.e., the fine particles) of the mixture are attached to coarse nuclei of the mixture of the particulate ores, the fluxes, and the coke breeze using the viscous concentrated sweetener so as to form better pseudo-particles with reduced bulk density on the sintering machine. Since the better pseudo-particles provide much more fraction of porosity and greater gas flow channels, which allow more sufficient combustion air to pass therethrough, the combustion efficiency can be promoted, the combustion time can be shortened, and the sintering production rate can be enhanced.

Preferably, the viscous concentrated sweetener is selected from the group consisting of molasses, sugarcane syrup, beet syrup, honey, maple sugar, fructose, fruit sugar, and combinations thereof.

The role of organic enzymes can act as sacrificed catalysts to lower the activation energy, promote the combustion rate, and decompose larger molecular-weight hydrocarbons of the coke breeze to smaller pieces, so that combustion of the coke breeze is more efficient and complete. The organic enzymes are produced from a bacteria selected from the group consisting of lactic acid bacteria, yeast, actinomycetes, and combinations thereof. The production enhancing agent may further include rice chaffs, soybean powder, camellia powder, rice wine, corn powder, potato powder, rice vinegar, trace mineral, or combinations thereof, which serve as substrate of the bacteria. Preferably, the trace mineral is selected from the group consisting of iron, aluminum, magnesium, silicon, and combinations thereof.

Preferably, the water content in the ore sintering composition ranges from 6-9 wt%, and the content of the production enhancing agent in the ore sintering composition ranges from 1 to 3 wt%.

In this invention, the ores can be iron, copper, zinc, manganese, bauxite, magnesite, etc.. The flux varies depending on the ores used. Generally, the flux can be limestone, dolomite, serpentine, silica sand, etc..

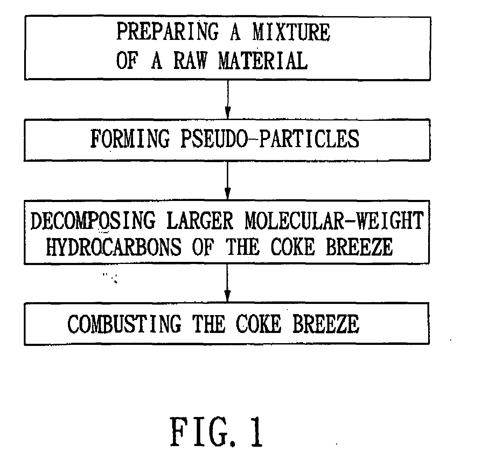

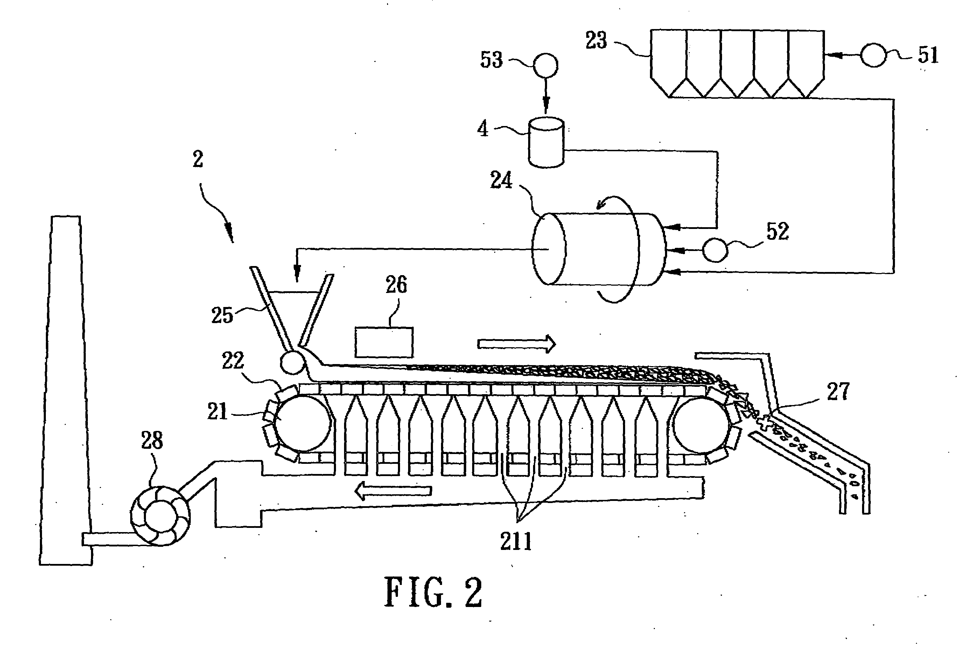

Fig. 1 illustrates consecutive steps of the preferred embodiment of an ore sintering method for producing the ore sintering composition according to this invention. Fig. 2 shows a sintering system for performing the ore sintering method according to this invention. In this embodiment, the iron ore is used as an example for the sake of illustration.

As shown in Fig. 1, the ore sintering method includes: preparing a mixture of raw material containing particulate iron ores, fluxes, and coke breeze; forming pseudo-particles by attaching adhering fines of the mixture of the raw material onto coarse nuclei of the mixture of the raw material through water and a viscous concentrated sweetener so as to form a sinter mix; decompose larger molecular-weight hydrocarbons of the coke breeze to smaller pieces by adding an organic enzyme into the raw material; and combusting the coke breeze to consolidate the raw material into a sinter cake.

As shown in Fig. 2, the sintering system 2 includes a sintering machine 21 with a plurality of air passages 211, a transporting belt 22 around the sintering machine 21, a raw material storage 23, a rotary, drum 24 for mixing the raw material, an ignition furnace 26, a breaker 27, and a pump 28 for pumping combustion air through the air passages 211.

The raw material including the mixture of the particulate iron ores, the fluxes, and the coke breeze is stored in the raw material storage 23. The production enhancing agent including the viscous concentrated sweetener and the organic enzyme can be directly added into the raw material storage 23 (i.e., through position 51). Alternatively, the production enhancing agent can be applied directly into the system 2 through position 52 (i.e., directed into the rotary drum 24) or position 53 (i.e., directed into a slurry recycling system 4 and then directed into the rotary drum 24). The raw material, water, and the production enhancing agent are mixed in the rotary drum 24 so as to form a sinter mix containing pseudo-particles. The sinter mix is then transported into a tank 25 and onto the sintering machine 21, or is directly transported onto the sintering machine 21. Upon passing through the ignition furnace 26, the coke breeze is ignited from top toward bottom of the sintering machine21.

After passing through the ignition furnace 26, the coke breeze is combusted and reaches 1250-1350°C in combustion zone, the fine particles of the pseudo-particles of the sinter mix are melted to form liquid calcium ferrite and wetting among the coarse nuclei of the sinter mix. Then, cool air is applied downward so as to allow the melted liquid calcium ferrite as binder to solidify the sinter mix into sinter cakes. The sinter cakes are then broken into chunks or lumps by the breaker 28. The chunks or lumps having a size greater than 5 mm are suitable for further smelting process. The chunks or lumps having a size smaller than 5 mm (i.e., the return fines) are recycled to the sintering process.

Table 1 shows the operating conditions of the sintering method, product properties, and amounts of waste gases of the examples of this invention and of the comparative' examples. It should be noted that when the coke breeze is ignited completely, the coke breeze is decomposed into CO₂ so as to provide much more energy, and is decomposed into CO to result in energy loss when the coke breeze is ignited insufficiently.

**Table 1**

| Production enhancing agent (wt %) | 0 wt% | | 1.5 wt% | | | 2.5 wt% | |
|---|---|---|---|---|---|---|---|
| | Comp. Exam. 1 | Comp. Exam. 2 | Exam. 1 | Exam. 2 | Exam. 3 | Exam. 4 | Exam. 5 |
| Operating conditions | | | | | | | |
| Sintering time (min) | 35.27 | 35.73 | 30.06 | 31.96 | 31.37 | 31.29 | 31.5 |
| Highest Temp. (°C) | 419.3 | 419.3 | 410.4 | 416.5 | 417.7 | 406.3 | 407.7 |
| Bulk density (g/cm³) | 2.15 | 2.16 | 2.12 | 2.10 | 2.00 | 2.15 | 2.12 |
| Water (wt %) | 6.92 | 7.02 | 7.12 | 6.97 | 7.22 | 8.35 | 7.81 |

| Product property | | | | | | | |
|---|---|---|---|---|---|---|---|
| Weight (kg) | 69.02 | 68.22 | 67.73 | 67.20 | 68.22 | 68.63 | 68.57 |
| Productivity (t/m²/24hr) | 32.96 | 32.16 | 37.95 | 35.42 | 36.63 | 36.95 | 36.67 |
| Tumbler Strength (%) | 72.80 | 72.00 | 67.73 | 70.13 | 71.00 | 69.93 | 70.87 |
| Return fine (kg) | 13.76 | 13.90 | 16.56 | 15.42 | 14.15 | 15.63 | 15.96 |

| Sintering waste gas | | | | | | | |
|---|---|---|---|---|---|---|---|
| O₂ (%) | 16.2 | 16.5 | 15.4 | 16.5 | 15.4 | 15.7 | 15.7 |
| CO (ppm) | 7264 | 7092 | 8065 | 7327 | 8055 | 6623 | 6265 |
| CO₂ (%) | 6.45 | 6.09 | 7.42 | 7.2 | 7.6 | 7.06 | 6.97 |
| CO/(CO+CO₂) | 0.101 | 0.104 | 0.098 | 0.092 | 0.096 | 0.086 | 0.082 |

The results in Table 1 show that the bulk density of each example of this invention is less than those of the comparative examples. Note that the productivity is defined by the produced amount of the sintered ores per meter square per 24 hours. The average productivities for Examples 1 to 3 and for Examples 4 and 5 are larger than those for Comparative Examples 1 and 2 by about 12.6 % and 13.1 %.

In addition, since Examples 1 to 5 have the production enhancing agent, the amounts of CO and CO₂ in the examples of this invention are larger than those in the comparative examples. However, in view of the ratio of CO to CO+CO₂, the ratio of each example is smaller than those of the comparative examples, which is an indication that the combustion of the coke breeze is more efficient and complete.

In order to verify that the production enhancing agent can promote the coal combustion efficiency, a lab scale experiment has been explored. In this experiment, ten grams of coal was mixed with 0%, 1%, 1.5%, 2%, and 3% of production enhancing agent and put in a ceramic crucible for heating for 40 min. The temperature (C°) vs. time (min) was recorded, and the area of time x temperature (C°•min) was calculated and presented. The results of the experiments showed that the areas of time x temperature were 12375, 13415, 13995, 14544 and 14432 (C°•min), respectively. It means that addition of 1%, 1.5%. 2%, and 3% of production enhancing agent in coal can increase the areas of time x temperature (C°•min) by 8.4%, 13.0%, 17.5%, and 16.6%, respectively. Normally, a higher magnitude of time x temperature (C°•min) means more energy released from the thermal reactor. In other words, the combustion is more complete and the fraction of unburned materials is much less.

To sum up, with the inclusion of the viscous concentrated sweetener, which results in formation of the better pseudo-particles with reduced bulk density on the sintering machine 21, which provides much more fraction of porosity and greater gas flow channels, and which allows more sufficient combustion air to pass therethrough, the combustion efficiency can be promoted, the combustion time can be shortened (i.e., improve flame front speed of combustion zone), thereby resulting in a decrease in sintering time, and an increase in the sintering production rate. In addition, with the inclusion of the organic enzyme, which acts as sacrificed catalysts to lower the activation energy, promotes the combustion rate, and decomposes larger molecular-weight hydrocarbons of the coke breeze to smaller pieces, combustion of the coke breeze is more efficient and complete and the energy efficiency can also be elevated. In this way, the air pollutants (incompletely burned materials) like CO and particulate emitted from the stack flue gases and the fraction of unburned materials in fly ash or bottom ash will be significantly reduced. Therefore, the production enhancing agent can be used in the coal-fired power plants for saving the energy and reducing the air pollutant emission. Furthermore, the production enhancing agent can be used in various combustion reactors such as municipal solid waste incinerators, industrial waste incinerators, biomass incinerators, medical waste incinerators for improving the combustion efficiencies, saving the energy, and reducing the air pollutant emissions.

## Claims

1. An ore sintering composition **characterized by**:
particulate ores;
fluxes;
coke breeze; and
a production enhancing agent that includes a viscous concentrated sweetener.

2. The ore sintering composition as claimed in Claim 1, **characterized in that** said production enhancing agent further includes an organic enzyme.

3. The ore sintering composition as claimed in Claim 2, further **characterized by** water.

4. The ore sintering composition as claimed in Claim 3, **characterized in that** the amount of said production enhancing agent ranges from 1 to 3 wt% based on the total weight of said ore sintering composition.

5. The ore sintering composition as claimed in Claim 4, further **characterized in that** the amount of said water ranges from 6 to 9 wt% based on the total weight of said ore sintering composition.

6. The ore sintering composition as claimed in Claim 1, **characterized in that** said viscous concentrated sweetener is selected from the group consisting of molasses, sugarcane syrup, beet syrup, honey, maple sugar, fructose, fruit sugar, and combinations thereof.

7. The ore sintering composition as claimed in Claim 2, further **characterized in that** said organic enzyme is produced from a bacteria selected from the group consisting of lactic acid bacteria, yeast, actinomycetes, and combinations thereof.

8. The ore sintering composition as claimed in Claim 7, further **characterized in that** said production enhancing agent further includes an additive selected from the group' consisting of rice chaffs, soybean powder, camellia powder, rice wine, corn powder, potato powder, rice vinegar, trace mineral, and combinations thereof.

9. The ore sintering composition as claimed in Claim 8, further **characterized in that** said trace mineral is selected from the group consisting of iron, aluminum, magnesium, silicon, and combinations thereof.

10. An ore sintering method **characterized by**:
preparing a raw material containing particulate ores, fluxes, and coke breeze;
forming pseudo-particles by attaching adhering fines of the raw material onto coarse nuclei of the raw material through water and a viscous concentrated sweetener so as to form a sinter mix; and
combusting the coke breeze to consolidate the sinter mix into a sinter cake.

11. The ore sintering method as claimed in Claim 10, further **characterized by**, before combustion, decomposing larger molecular-weight hydrocarbons of the coke breeze to smaller pieces of the coke breeze by adding an organic enzyme into the raw material.

12. The ore sintering method as claimed in Claim 11, further **characterized in that** the total amount of the viscous concentrated sweetener and the organic enzyme ranges from 1 to 3 wt% based on the total weight of the raw material, water, the viscous concentrated sweetener, and the organic enzyme.

13. The ore sintering method as claimed in Claim 10, **characterized in that** the viscous concentrated sweetener is selected from the group consisting of molasses, sugarcane syrup, beet syrup, honey, maple sugar, fructose, fruit sugar, and combinations thereof.

14. The ore sintering method as claimed in Claim 11, further **characterized in that** the organic enzyme is produced from a bacteria selected from the group consisting of lactic acid bacteria, yeast, actinomycetes, and combinations thereof.
